Europäisches Patentamt

European Patent Office

Office européen des brevets

(11) Veröffentlichungsnummer: **0 103 295**
**A2**

## EUROPÄISCHE PATENTANMELDUNG

(21) Anmeldenummer: 83108997.4

(51) Int. Cl.³: **G 06 F 15/40**

(22) Anmeldetag: 12.09.83

(30) Priorität: 14.09.82 DE 3234079

(43) Veröffentlichungstag der Anmeldung: 21.03.84
Patentblatt 84/12

(84) Benannte Vertragsstaaten: **AT BE CH DE FR GB IT LI LU NL SE**

(71) Anmelder: **Nixdorf Computer Aktiengesellschaft, Fürstenallee 7, D-4790 Paderborn (DE)**

(72) Erfinder: **Burchart, Joachim, Am Fichtenhain 14, D-4797 Schlangen 2 (DE)**
Erfinder: **Ohland, Günther, Klausheider Strasse 6, D-4790 Paderborn (DE)**

(74) Vertreter: **Schaumburg, Schulz-Dörlam & Thoenes, Mauerkircherstrasse 31 Postfach 86 07 48, D-8000 München 86 (DE)**

(54) **Informationssystem.**

(57) Ein Informationssystem umfaßt mehrere Datenbanken und Endeinrichtungen (E). Von jeder Endeinrichtung (E) führen Verbindungswege (V1 bis V4) zu jeder Datenbank. Jede Endeinrichtung (E) umfaßt einen Prozessor (44), einen Speicher (46), eine Übersetzungseinrichtung (48) und eine Verbindungseinheit (50). Im Speicher (46) sind Daten gespeichert, die physikalische und/oder logische Parameter der Verbindungswege (V1 bis V4) kennzeichnen, sowie Schlüsselworte für in den Datenbanken gespeicherte Sachgebiete. Dem Benutzer werden auf Anforderung die Schlüsselworte ausgegeben, und auf Eingabe eines Schlüsselwortes erhält er die Adressen derjenigen Datenbanken ausgegeben, für die das Schlüsselwort gilt. Auf die Eingabe der Adresse einer Datenbank bewirkt der Prozessor (44) einen automatischen Verbindungsaufbau zu dieser. Beim Dialog mit der Datenbank verwendet der Benutzer der Endeinrichtung (E) eine übergeordnete Befehlssprache, die von der Übersetzungseinrichtung (48) in die datenbankspezifische Befehlssprache übersetzt wird und umgekehrt.

0103295

Die Erfindung bezieht sich auf ein Informationssystem nach dem Oberbegriff des Anspruchs 1.

Übliche Informationssysteme zur Übertragung von Informationsdaten im Dialogbetrieb umfassen eine einzige Datenbank, die von einer mindestens einen Speicher für Informationsdaten und für Suchworte(Schlagworte, Thesaurus, Klassifikation, Schlüssel)umfassenden Datenverarbeitungsanlage gebildet ist, und eine Mehrzahl von daran über mindestens einen Verbindungsweg anschaltbaren Endeinrichtungen für Daten, wobei der Zugriff auf die Informationsdaten der Datenbank durch Eingabe von Suchworten und von Befehlen der jeweiligen Befehlstabelle der Datenbank in diese erfolgt. Solche Informationssysteme sind von staatlichen, halbstaatlichen und privatwirtschaftlichen Unternehmungen getragen und dienen beispielsweise als medizinische Diagnostik-Informationssysteme, als Staatsbürger-Datenbank, als staatliche Straßen-Datenbank, als Informationssystem für gewerblichen Rechtsschutz (Patentdokumentation; Rechtsprechung), als Informationssystem der Kriminalämter, als Informationssystem von Presse und Rundfunk, als Dokumentationssystem für Hochschulbibliotheken usw. Dabei hat jedes Informationssystem, bedingt durch unterschiedliche Hersteller und unterschiedliche Anforderungen der Praxis eigene, durch besondere logische und/oder physikalische Parameter wie Übertragungsprotokolle, Formatierung (Wortlängen, Blocklängen), Paritybitbildung, Halb- oder Voll-Duplex, Zwei- oder Vierdrahtausführung, Übertragungsgeschwindigkeit gekennzeichnete Verbindungswege und eine eigene Dialogsprache. Die Dialogsprachen unterscheiden sich im

0103295

wesentlichen durch unterschiedliche Befehlstabellen. Möchte ein Teilnehmer mehrere Datenbanken nutzen, so muß er im allgemeinen mehrere Endeinrichtungen verwenden, die von mehreren, mit der jeweiligen Dialogsprache vertrauten Bedienungspersonen bedient werden und die an die jeweilige Datenbank über verschiedene Parameter aufweisende Verbindungswege anschaltbar sind. Daher ergibt sich sehr hoher Installations- und Bedienungsaufwand, der in der Praxis dazu führt, daß wichtige Informationsquellen ungenutzt bleiben.

Es ist auch bekannt, mehrere, eine einheitliche Dialogsprache aufweisende Datenbanken über ein hinsichtlich der verwendeten logischen und physikalischen Parameter einheitliches Verbindungsnetz mit einer Vielzahl von Endstellen zu verbinden. So können beispielsweise die Datenbanken bestimmter Patentämter, eine Datenbank für Patentdokumentation und eine Datenbank für Rechtsprechung des gewerblichen Rechtschutzes über ein öffentliches Netz von einer Vielzahl von Endstellen erreicht werden. Auch hierbei verhindern es die besonderen Parameter des Verbindungsnetzes und die gewählte Dialogsprache, daß die Teilnehmer weitere Datenbanken als Informationsquellen nutzen, die über anders ausgebildete Verbindungswege erreichbar sind und/oder die mit unterschiedlichen Dialogsprachen arbeiten.

Der Erfindung liegt die Aufgabe zugrunde, ein Informationssystem zu schaffen, bei dem die Benutzer der Endeinrichtungen mit einer Mehrzahl von Datenverarbeitungsanlagen und darunter mit mindestens einer Datenbank kommunizieren können.

0103295

Die Aufgabe wird gemäß der Erfindung bei einem Informationssystem der eingangs genannten Art durch die im Kennzeichenteil des Anspruchs 1 angegebenen Merkmale gelöst.

Bei dem neuen Informationssystem kann der Benutzer einer Endeinrichtung wahlweise mit verschiedenen Datenverarbeitungsanlagen kommunizieren, von denen mindestens eine als Datenbank ausgebildet ist. Bei der Anschaltung an letztere bewirkt der in der verwendeten Endeinrichtung vorhandene Prozessor automatisch eine Einstellung der Endeinrichtung entsprechend den physikalischen und/oder logischen Parametern des zu der anzuschaltenden Datenbank führenden Verbindungsweges.

Ausgestaltungen der Erfindung sind in den Unteransprüchen angegeben.

Gemäß der Ausgestaltung nach Anspruch 2 steht dem Benutzer jeder Endeinrichtung eine Dialogsprache zur Verfügung, deren Befehlstabelle so mächtig ist, daß in ihr alle bei allen Datenbanken gebräuchliche Befehle enthalten sind. Das Auffinden einer geeigneten Datenbank, in der ein von dem Benutzer gesuchtes Sachgebiet und entsprechende Informationsdaten gespeichert sind, ist durch die zunächst erfolgende Ausgabe der die Sachgebiete beschreibenden Schlüsselworte und die auf die Eingabe eines Schlüsselwortes erfolgende Ausgabe der Adresse mindestens einer Datenbank ohne Schwierigkeiten möglich. Die Anschaltung der Endeinrichtung an den zu der ausgewählten Datenbank

- 4 -                    0103295

führenden Verbindungsweg und die Übersetzung und Rückübersetzung der Befehle können unter der Steuerung des
in jeder Endeinrichtung vorhandenen Prozessors automatisch erfolgen.

Bei der vorgenannten Ausgestaltung ist davon ausgegangen, daß die Zahl der Suchworte jeder Datenbank so
groß sein kann (bei einigen Datenbanken mehr als
100 000), daß diese Suchworte nicht ohne übermäßigen
Aufwand in den Endeinrichtungen gespeichert werden
können. In diesen sind vielmehr nur Schlüsselworte gespeichert, die eine grobe Beschreibung der Datenbank-
Inhalte darstellen. Die Hierarchie der Schlüsselworte
und Suchworte kann beispielsweise für eine bestimmte
Datenbank wie folgt aussehen:

1. (höchste) Stufe:    Fachgebietswort (z.B. Medizin)
                       (gespeichert in der Endeinrichtung)

2. Stufe:              Schlüsselwort (z.B. Hals-Nasen-
                                       Ohren)
                       (gespeichert in der Endeinrichtung)

3. Stufe:              Suchwort (z.B. Mandelentzündung)
                       (gespeichert in der Datenbank, muß
                       vom Benutzer im Dialog mit der
                       Datenbank eingegeben werden).

Die Erfindung wird im folgenden anhand der Zeichnungen
näher erläutert. Es zeigt:

Fig. 1  ein Informationssystem;

Fig. 2 eine Endeinrichtung des Informaitonssystems gemäß Fig. 1;

Fig. 3 ein Ablaufdiagramm zur Erläuterung des Verbindungsaufbaues zwischen einer Endstelle und
einer Datenbank bei dem Informationssystem
nach Fig. 1.

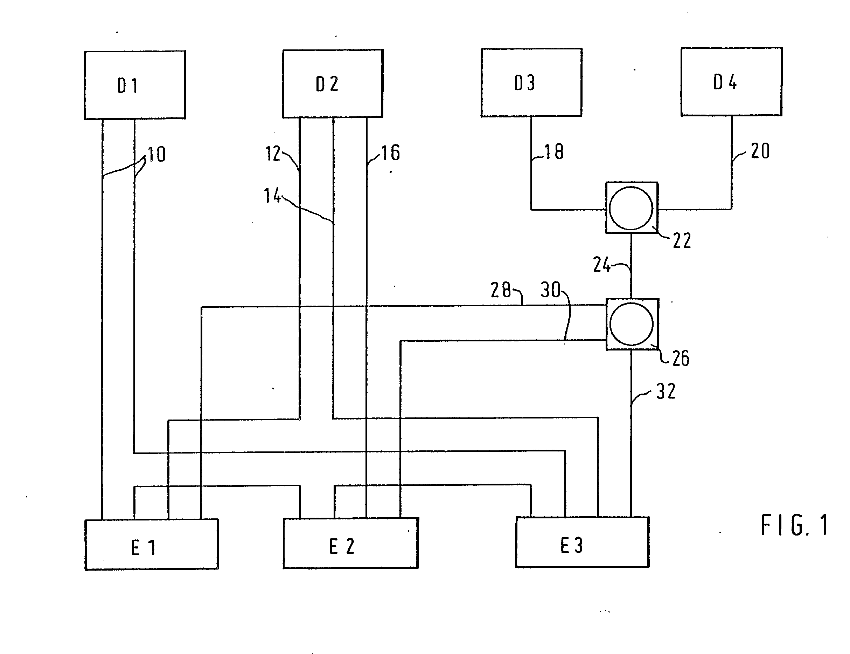

Das in Fig. 1 dargestellte Informationssystem umfaßt
mehrere Datenbanken D1 bis D4, die jeweils von einer
mindestens einen Speicher für Informationsdaten und für
Suchworte umfassenden Datenverarbeitungsanlage gebildet sind. Weiter umfaßt das Informationssystem eine
Vielzahl von untereinander gleichen Endeinrichtungen,
von denen nur drei Endeinrichtungen E1 bis E3 dargestellt sind. Von jeder Endeinrichtung E1 bis E3 führen
Verbindungswege zu jeder Datenbank D1 bis D4, an die die
Endeinrichtungen E1 bis E3 wahlweise anschaltbar sind.
Zur Verbindung mit der Datenbank D1 ist eine Ringleitung 10 vorgesehen. Das Verbindungsnetz der Datenbank D2 ist bezüglich dieser sternförmig ausgebildet;
von jeder der Endeinrichtungen E1 bis E3 führt ein Verbindungsweg 12, 14 , 16 zur Datenbank D2. Die Datenbanken D3, D4 sind über Leitungen 18, 20 an eine Vermittlungsstelle 22 eines öffentlichen Netzes, beispielsweise des Telefonnetzes, angeschlossen und über
eine Leitung 24 mit einer weiteren Vermittlungsstelle 26 verbunden, an die die Endeinrichtungen E1 bis
E3 über Leitungen 28, 30, 32 anschließbar sind. Die
Dialogsprachen der Datenbanken D1, D2 sind unterschiedlich. Sie unterscheiden sich zumindest hinsichtlich der jeweiligen Befehlstabelle sowie auch wegen der unterschiedlichen Natur der Verbindungswege 10 bzw. 12, 14, 16 hinsichtlich der logischen Parameter wie beispielsweise des Übertragungsprotokolls. Zudem erfordern die unterschiedlichen Verbindungswege unterschiedliche physikalische Parameter, wie Datenrate, Halb- oder Vollduplex, Paritätsbit usw. Die Datenbanken D3, D4 arbeiten mit derselben Dialogsprache, die sich von denjenigen der Datenbanken D1, D2 unterscheidet. Auch die physikalischen und logischen Parameter des Verbindungsweges sind hierbei wiederum unterschiedlich gegenüber den Verbindungswegen der Datenbanken D1, D2.

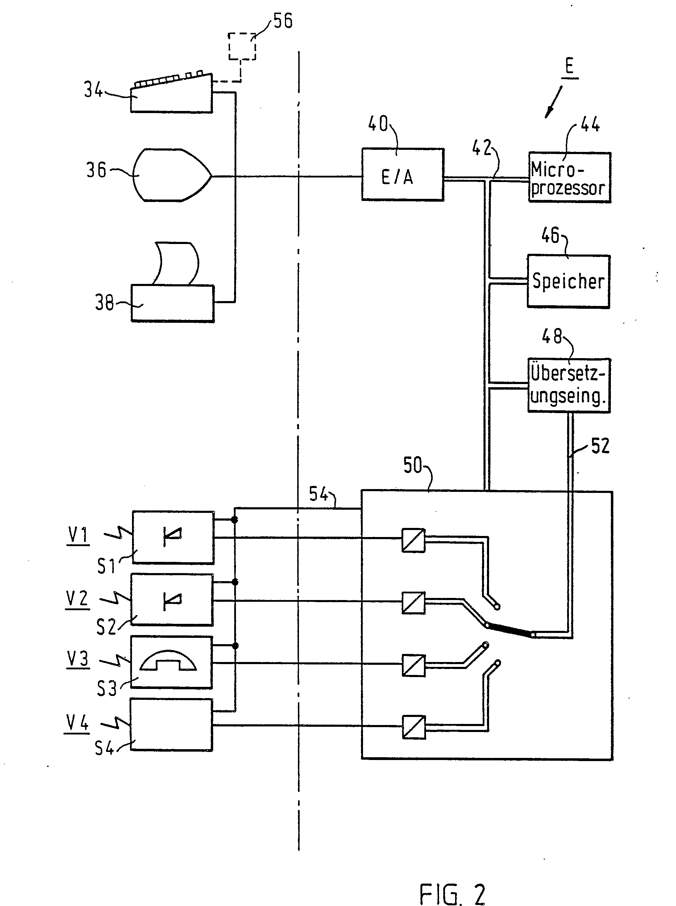

In Fig. 2 ist der Aufbau einer Endeinrichtung E dargestellt, bei der es sich um eine der Endeinrichtungen E1 bis E3 in Fig. 1 handeln kann. Die Endeinrichtung E umfaßt einen Eingabeteil in Gestalt einer Tastatur 34, einen ersten Ausgabeteil in Gestalt eines Bildschirmgerätes 36 und einen wahlweise zuschaltbaren zweiten Ausgabeteil in Gestalt eines Druckers 38, die über eine Ein-/Ausgabeeinrichtung 40 mit einer internen Sammelleitung (Bus) 42 verbunden sind. An die Sammelleitung 42 sind weiter ein als Mikroprozessor ausgebildeter Prozessor 44, ein Speicher 46, eine Übersetzungseinrichtung 48 und eine Verbindungseinrichtung 50 angeschlossen. Über letztere erfolgt wahlweise die Anschaltung an jeweils einen Verbindungsweg V1 bis V4. Teile dieser Verbindungswege V1 bis V4 bildende Signalwandler S1 bis S4, die das zur Endeinrichtung E hin liegende Ende des jeweiligen Verbindungsweges V1 bis V4 bilden, können baulich mit der Endeinrichtung E vereinigt sein.

0103295

Beim Dialog mit einer der Datenbanken, mit denen die Endeinrichtung E verbindbar ist, werden in die Datenbank Suchworte eingegeben, um auf die Informationsdaten der Datenbank zuzugreifen. Der Speicher 46 enthält bezüglich jeder Datenbank Daten, die eine Adresse der Datenbank, eine Teilnehmeradresse der Endeinrichtung E bezüglich dieser Datenbank und die Befehlstabelle der Datenbank kennzeichnen. Als die Befehlstabelle jeder Datenbank kennzeichnende Daten sind beim Ausführungsbeispiel im Speicher 46 Sprachwandler-Adressen abgespeichert, deren Verwendung durch die Übersetzungseinrichtung 48 noch beschrieben wird. Der Speicher 46 kann überdies Daten speichern, die bezüglich einiger oder aller Datenbanken den erforderlichen Verbindungsweg V1 bis V4 bezeichnen; dies ist jedenfalls dann erforderlich, wenn wie im Falle der Datenbanken D3, D4 in Fig. 1 mehrere Datenbanken über dasselbe Verbindungsnetz erreicht werden, in welchem durch Wähl- und Schaltvorgänge der gewünschte Verbindungsweg aufgebaut werden muß.

Die Übersetzungseinrichtung 48 umfaßt eine der Anzahl der unterschiedlichen Dialogsprachen der Datenbanken gleichende Anzahl von Sprachwandlern. Beim Einsatz des Endgerätes E als eines der Endgeräte E1 bis E3 in Fig. 1, wo diese mit vier Datenbanken D1 bis D4 verbindbar sind, von denen jedoch zwei Datenbanken D3, D4 untereinander gleiche Dialogsprachen aufweisen, würde die Übersetzungseinrichtung 48 also drei Sprachwandler umfassen. Diese Sprachwandler sind zur Übersetzung jeweils einer datenbankspezifischen Befehlstabelle in eine einzige übergeordnete Befehlstabelle

0103295

und umgekehrt ausgebildet, so daß der Benutzer der Endeinrichtung E Befehle ausschließlich in einer übergeordneten Dialogsprache eingibt und ausgegeben erhält, die die übergeordnete Befehlstabelle umfaßt. Der Prozessor 44 aktiviert bei der Anschaltung der Endeinrichtung E an einen zu einer bestimmten Datenbank führenden Verbindungsweg V1 bis V4 in Abhängigkeit von der aktuellen Adresse der Datenbank den zugehörigen Sprachwandler in der Übersetzungseinrichtung 48, der im aktivierten Zustand bei Eingabe eines Befehls über die Tastatur 34 diesen aus der übergeordneten Befehlstabelle in einen Befehl der datenbankspezifischen Befehlstabelle übersetzt und umgekehrt bei Empfang eines mit der jeweiligen Teilnehmeradresse verknüpften Befehls von der verbundenen Datenbank die Übersetzung in einen Befehl der übergeordneten Befehlstabelle ausführt.

Jeder der Sprachwandler in der Übersetzungseinrichtung 48 umfaßt einen Speicherbereich, bei dem es sich um einen reinen Lesespeicher (ROM) oder um einen programmierbaren Lesespeicher (PROM) handeln kann. Es können auch Teile des Speicherbereichs durch einen Schreib-Lesespeicher (RAM) gebildet sein. So kann in einem Ausführungsbeispiel nur der Sprachwandler einen Lesespeicher beinhalten, der für die Verbindung der Endeinrichtung E mit einer lokalen Datenverarbeitungsanlage bestimmt ist. Ein Beutzer muß sich dann zunächst, beispielsweise durch Eingabe einer Personalnummer, bei der Datenverarbeitungsanlage identifizieren, ehe die Sprachwandler der Datenbanken, mit denen der Benutzer zu korrespondieren berechtigt ist, in den Lesespeicher geladen werden.

Durch den Einsatz eines Schreib-Lesespeichers kann auch der Speicher eine wirtschaftlich vertretbare Größe behalten, selbst wenn mit vielen verschiedenen Sprachwandlern gearbeitet werden muß. Es können dann beispielsweise nur die Schlüsselwörter aller Datenbanken ständig im Speicher gespeichert sein, während alle übrigen datenbankspezifischen Daten erst in den Speicher geladen werden, nachdem eine Datenbank ausgewählt wurde. Weiter ergibt sich durch den Einsatz eines Schreib-Lesespeichers der Vorteil, daß die Zusammensetzung und Anzahl der an sprechbaren Datenbanken jederzeit geändert werden kann, ohne in allen Endeinrichtungen die Lesespeicher austauschen zu müssen.

Wie erwähnt, speichert der Speicher 46 als die Befehlsliste jeder Datenbank kennzeichnende Daten eine Adresse des der Befehlsliste zugeordnetne Sprachwandlers. In Abhängigkeit von der aktuellen Adresse einer Datenbank bewirkt der Prozessor 44 das Auslesen der Adresse des zugeordneten Sprachwandlers aus dem Speicher 46. Die Speicherplätze des Speicherbereichs des adressierten Sprachwandlers sind dabei zur Übersetzung aus der übergeordneten Befehlstabelle in die Befehlstabelle der verbundenen Datenbank von Befehlsworten adressierbar, die vom Prozessor 44 aus der aktuellen Adresse des Sprachwandlers und einem über die Tastatur 34 eingegebenen Befehl gebildet sind. Umgekehrt werden die Speicherplätze des jeweiligen Lesespeichers zur Übersetzung aus der Befehlstabelle einer verbundenen Datenbank in die übergeordnete Befehlstabelle von Befehlsworten adressiert, die aus der aktuellen Adresse des Sprachwandlers und einem von der verbundenen Datenbank her empfangenen Befehl gebildet sind. Die letztgenannte Rückübersetzung von Befehlen in die übergeordnete Dialogsprache erfolgt allerdings nur dann, d.h. in zusätzlicher konjunktiver Abhängigkeit davon, daß in dem von der Datenbank erhaltenen Befehl die Teilnehmeradresse der Endeinrichtung E enthalten ist oder in einem vorangegangenen erhaltenen, noch aktuellen Befehl die Teilnehmeradresse enthalten war und noch im Prozessor 44 gespeichert ist. Informationsdaten werden in der Übersetzungseinrichtung 48 nicht gewandelt. Zu sendende Informationsdaten gelangen unter Steuerung durch den Prozessor 44 über die Sammelleitung 42 unmittelbar zur Verbindungseinrichtung 50, und empfangene Informationsdaten gelangen aus der Verbindungseinrichtung 50 unmittelbar auf die an sie angeschlossene Sammelleitung 42. Von der verbundenen Datenbank empfangene Daten, nämlich sowohl Informationsdaten wie Befehle, werden zwar über die Sammelleitung 52 unmittelbar dem zugeordneten, in der Übersetzungseinrichtung 48 enthaltenen Sprachwandler zugeführt, jedoch werden nur die Befehle aus der datenbankspezifischen Dialogsprache übersetzt, die Adressen des aktivierten Sprachwandlers darstellen. Daten, die keine Sprachwandler-Adressen darstellen, also Informationsdaten, werden unverändert über die Sammelleitung 42 zum Prozessor 44 weitergeleitet.

Die Verbindungseinrichtung 50 schaltet - gesteuert durch den Prozessor 44 in Abhängigkeit von der aktuellen Adresse einer Datenbank oder einer daraus abgeleiteten Adresse, beispielsweise der Adresse des aktivierten Sprachwandlers - die Daten von der Sammelleitung 52 weiter auf den zugeordneten Verbindungsweg V1 bis V4. In der Verbindungseinrichtung 50 wird auch erforderlichenfalls die Wandlung von auf der Sammelleitung 52 übertragenen, parallelen Daten in die für die Verbindungswege V1 bis V4 erforderliche serielle Form und umgekehrt durchgeführt. Ebenfalls erfolgen in der Verbindungseinrichtung 50 erforderlichenfalls in Abhängigkeit von der aktuellen Adresse einer Datenbank die erforderlichen Potential- und Impedanzanpassungen usw.

Die Übersetzung zwischen der übergeordneten Dialogsprache und den datenbankspezifischen Dialogsprachen erfolgt zweckmäßig wie beim Ausführungsbeispiel nicht lediglich hinsichtlich der Befehlsliste, sondern auch hinsichtlich der physikalischen Parameter (Datenrate, Halb-/Vollduplex, Paritätsbit usw.) und der logischen Parameter (Übertragungsprotokoll) der zugeordneten Verbindungswege V1 bis V4. Hierzu sind die Sprachwandler in der Übersetzungseinrichtung 48 derart ausgebildet, daß sie zugleich mit der Übersetzung von zu sendenden oder empfangenen Befehlen entsprechende Befehle an die Verbindungseinrichtung 50 liefern, die von dieser ausgeführt werden. Abweichend hiervon wäre es möglich, auch im Speicher 46 Daten zu speichern, die die physikalischen und logischen Parameter kennzeichnen, diese Daten gesteuert vom Prozessor 44 in Abhängigkeit von der aktuellen Adresse der Datenbank abzurufen und hiermit die Verbindungseinrichtung 50 zu steuern.

Die Signalwandler S1 bis S4, die zwar signaltechnisch Teile der Verbindungswege V1 bis V4 bilden, jedoch konstruktiv mit der Endeinrichtung E vereinigt sein können, können beispielsweise wie in Fig. 2 ein Fernsprechnetz-Modem, ein Bildschirmtext-Modem, ein Akustikkoppler oder sonstige geeignete Wandler sein, wie sie zum Anschluß an die in Fig. 1 gezeigten Verbindungswege erforderlich sind. Sofern wie im Falle des öffentlichen Telefonnetzes der Verbindungsweg durch Wählverbindungen in einem Netz geschaffen wird, können die entsprechenden Wählvorgänge beim Verbindungsaufbau auch in den Signalwandlern S1 bis S4 durchgeführt werden. Auch zur Einstellung anderer erforderlicher Einstellvorgänge werden die Signalwandler S1 bis S4 von der Verbindungseinheit 50 über eine Leitung 54 entsprechend gesteuert. Einer der Signalwandler - im Beispiel der Fig. 2 der Signalwandler S4 - kann auch zum Anschluß der Endeinrichtung E an eine lokale (hauseigene) Datenverarbeitungseinrichtung ausgebildet sein, so daß die Endeinrichtung E außer zum Dialog mit Datenbanken zugleich auch als Endeinrichtung dieser lokalen Datenverarbeitungseinrichtung dienen kann.

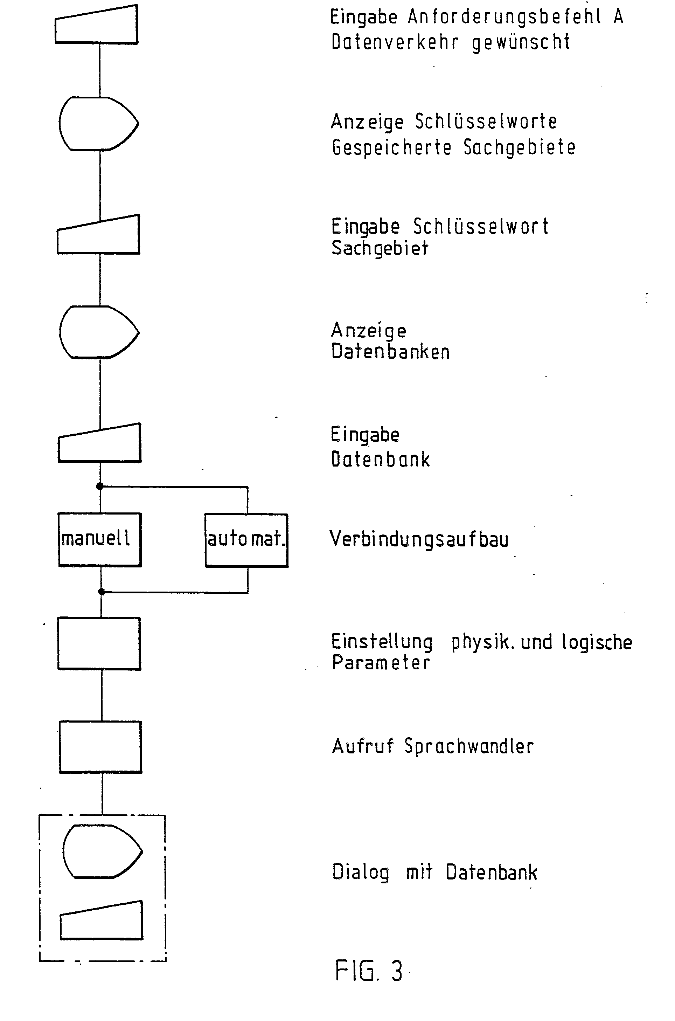

Im folgenden sei anhand von Fig. 3 erläutert, wie ein Benutzer der Endstelleneinrichtung E eine geeignete Datenbank auffindet und auswählt und wie der Aufbau des Verbindungsweges zu dieser erfolgt.

Bei in Betrieb gesetzter Endeinrichtung E (Fig. 2) gibt der Benutzer über die Tastatur 34 einen Anforderungsbefehl A ein, der anzeigt, daß der Benutzer einen Datenverkehr wünscht. Hierauf bewirkt der Prozessor 44 (Fig. 2) die Ausgabe von Schlüsselworten, und zwar werden im Beispiel der Fig. 3 alle, jeweils ein Sachgebiet

beschreibende Schlüsselworte aller verbindbaren Datenbanken auf dem Bildschirm 36 (Fig. 2) angezeigt. Der Benutzer wählt hierunter das ihn interessierende Sachgebiet aus, indem er das entsprechende Schlüsselwort über die Tastatur 34 (Fig. 2) eingibt. Aufgrund dieser Eingabe bewirkt der Prozessor 44 die Anzeige der Adressen aller Datenbanken, in denen das gewünschte Sachgebiet gespeichert ist. Der Benutzer gibt nun die Adresse einer einzigen gewünschten Datenbank ein. Hierauf bewirkt der Prozessor 44 einen zumindest teilweise automatischen Verbindungsaufbau insoweit, als in der Verbindungseinrichtung 50 die Sammelleitungen 42, 52 mit demjenigen Signalwandler S1 bis S4 verbunden werden, der dem der aktuellen Datenbankadresse zugehörigen Verbindungsweg V1 bis V4 angehört. Beim Ausführungsbeispiel der Endeinrichtung E nach Fig. 2 erfolgt auch der übrige Verbindungsaufbau in der bereits oben beschriebenen Weise völlig automatisch. Alternativ könnte daran gedacht werden, beispielsweise bei einer erforderlichen Wählverbindung über ein öffentliches Fernsprechnetz den Verbindungsaufbau teilweise manuell einzuleiten, indem das Wählen der Fernsprechnummer der gewünschten Datenbank über die Tastatur oder Wähleinrichtung des Fernsprechapparates erfolgt. Ist der Signalwandler ein Akustikkoppler, so muß nach dem Aufbau der Telefonverbindung auch noch der Handapparat des Telefons mit dem Akustikkoppler verbunden werden. Weiter erfolgt in Abhängigkeit von der aktuellen Adresse der Datenbank unter Steuerung durch den Prozessor 44 die Einstellung der physikalischen und logischen Parameter des Verbindungsweges in der Verbindungseinrichtung 50 und der Aufruf des der aktuellen Adresse der Datenbank zugeordneten Sprachwandlers in der Übersetzungseinrichtung 48. Nach erfolgtem Aufbau der Verbindung kann dann der Dialog mit
der Datenbank in üblicher Weise erfolgen, wobei sich der
Benutzer der übergeordneten Dialogsprache mit der
übergeordneten Befehlstabelle bedient.

Die Eingabe des Anforderungsbefehls A über die Tastatur
34 kann dadurch erfolgen, daß eine bestimmte Zeichenkombination über die alphanumerischen Tasten der
Tastatur 34 eingegeben wird, beispielsweise die Kombination "+?". Ebenfalls ist es möglich, zur Eingabe
des Anforderungsbefehls A eine gesonderte Befehlstaste vorzusehen.

Im allgemeinen wird die Anzahl der im Speicher 46 gespeicherten Schlüsselworte aller Datenbanken so groß
sein, daß die Schlüsselworte nicht gleichzeitig auf dem
Bildschirmgerät 36 angezeigt werden können. In diesem
Fall bewirkt zweckmäßig der Prozessor 44 die Ausgabe
der Schlüsselworte gruppenweise nacheinander, wobei
eine Gruppe jeweils eine höchstens einer vorbestimmten
maximalen Anzahl gleichende Anzahl von nach einem vorgegebenen Ordnungskriterium geordneten Schlüsselworten
umfaßt.

Die Anzeige einer ersten Gruppe von Schlüsselworten erfolgt dann auf den Anforderungsbefehl A hin, und die
Fortschaltung von Gruppe zu Gruppe wird durch jeweils
erneute Eingabe dieses Anforderungsbefehls A ausgelöst.
Das Ordnungskriterium, nach dem die Schlüsselworte auf
die Gruppen verteilt sind und innerhalb jeder Gruppe geordnet sind, ist zweckmäßig die alphabetische Reihenfolge.

Für spezialisierte Datenbanken, beispielsweise eine Datenbank für medizinische Diagnostik, sind im allgemeinen nur Schlüsselwörter gespeichert, die Sachgebiete bezeichnen und unter diese Sachgebiete fallende Deskriptoren bilden, nicht aber Schlüsselworte, die Oberbegriffe zu den Sachgebieten bilden, im angegebenen Beispiel also "Humanmedizin" oder "Medizin" oder "Naturwissenschaften". Dies deshalb, weil solche Oberbegriffe der Fachgebietsbezeichnungen für den Benutzer einer einzigen Datenbank üblicherweise selbstverständlich sind und sich auch aus der Bezeichnung der Datenbank ergeben mögen. Für den Benutzer der Endeinrichtung E, die mit einer Mehrzahl und gegebenenfalls einer großen Anzahl von Datenbanken kommunizieren kann, kann dagegen die Auswahl einer geeigneten Datenbank in der Weise zweckmäßig sein, daß zunächst ein Fachgebietswort ausgewählt wird, das den Schlüsselworten im Sinne der Bildung eines Oberbegriffs hierarchisch übergeordnet ist. Hierzu sind zweckmäßig im Speicher 46 jeder Endeinrichtung E zusätzlich zu den Schlüsselworten Fachgebietsworte gespeichert, die Oberbegriffe zu den genannten Schlüsselworten bilden. Der Prozessor 44 bewirkt dann auf die Eingabe eines ersten Anforderungsbefehls A hin die Ausgabe der Fachgebietsworte und auf die Eingabe eines zweiten Anforderungsbefehls hin die Ausgabe von den Fachgebietsworten zugeordneten Schlüsselworten aller Datenbanken. Der zweite Anforderungsbefehl wird zweckmäßig durch die erneute Eingabe des Anforderungsbefehls A in Abhängigkeit davon gebildet, daß die Fachgebietsworte ausgegeben und ein Fachgebietswort eingegeben sind. Bei der Ausgabe der den Fachgebietsworten zugeordneten Schlüsselworte kann dann wieder in der bereits erläuterten Weise eine gruppenweise Ausgabe erfolgen.

Um die Schlüsselworte für eine schnelle und leichte Eingabe möglichst kurz halten zu können, dem Benutzer jedoch ein genaues Verständnis der Schlüsselworte zu erleichtern, kann vorgesehen sein, daß die Schlüsselworte in dem Speicher 46 jeder Endeinrichtung E als Teilbereich einer Schlüsselwortfolge gespeichert sind, die zusätzliche Erläuterungen zu dem Schlüsselwort enthält. Bei der Ausgabe der Schlüsselworte über das Bildschirmgerät 36 werden dann jeweils die gesamten Schlüsselwortfolgen angezeigt, während es zur Eingabe des Schlüsselworts genügt, dieses dann gegebenenfalls kodierte und nur aus wenigen alphanumerischen Zeichen bestehende Schlüsselwort einzutasten.

Der Prozessor 44 kann so ausgebildet sein, daß er ein eingegebenes Schlüsselwort unmittelbar nach seiner Vervollständigung als Schlüsselwort erkennt und hierauf die Ausgabe der Adresse oder Adressen von Datenbanken bewirkt, für die das Schlüsselwort gespeichert ist. Für viele Informationszwecke ist es jedoch erforderlich, einen interessierenden Sachverhalt durch mehrere Schlüsselworte zu beschreiben. Damit der Benutzer der Endeinrichtung E dies erforderlichenfalls tun kann, kann vorgesehen sein, daß die Ausgabe der Adresse oder Adressen von Datenbanken durch den Prozessor 44 erst dann erfolgt, wenn zusätzlich zu mindestens einem Schlüsselwort noch ein gesonderter Fortschaltbefehl eingegeben ist. Es ist so für den Benutzer möglich, gewünschtenfalls mehrere Schlüsselworte nacheinander über die Tastatur 34 einzugeben, bevor der Fortschaltbefehl gegeben wird, worauf der Prozessor 44 die Ausgabe nur derjenigen Adressen von Datenbanken bewirkt, für die jeweils alle diese Schlüsselworte gespeichert sind. Als Fortschaltbefehl kann der Anforderungsbefehl A wiederholt werden, der in diesem Fall, mämlich in Abhängigkeit von der vorhergehenden Ausgabe von Schlüsselworten und von der vorhergehenden Eingabe mindestens eines Schlüsselwortes, vom Prozessor A als Fortschaltbefehl interpretiert wird.

Um die Adressen der Datenbanken möglichst kurz zu halten und deren Eingabe durch den Benutzer zu erleichtern, kann vorgesehen sein, daß die Adressen der Datenbanken in den Speichern 46 der Endeinrichtungen E jeweils als Teilbereich einer Adressenwortfolge gespeichert sind, die zusätzlich zu der jeweiligen Adresse der Datenbank eine Beschreibung der Datenbank umfaßt, und daß diese Adressenwortfolge auf die Eingabe eines Schlüsselwortes und gegebenenfalls des Fortschaltbefehls hin ausgegeben wird. Die Adressenwortfolge kann beispielsweise die volle Bezeichnung der Datenbank in der Übersetzung in die Nationalsprache des Benutzers der Endeinrichtung oder die postalische Adresse der Datenbank umfassen. Dem Benutzer wird so die Auswahl zwischen gegebenenfalls mehreren ausgegebenen Datenbankadressen erleichtert, da er beispielsweise unter mehreren Datenbanken diejenige auswählen kann, deren Nationalsprache er am besten versteht oder zu der der Verbindungsweg am kürzesten ist. Die Adresse der Datenbank kann dann wesentlich kürzer als die Adressenwortfolge sein und beispielsweise nur wenige alphanumerische Zeichen umfassen, die von dem Benutzer eingegeben werden müssen.

Während der Benutzer der Endeinrichtung E ein Schlüsselwort oder eine Datenbankadresse über die Tastatur 34 eingibt, sollte die Ausgabe von Schlüsselworten bzw. von Datenbankadressen durch Anzeige auf dem Bildschirmgerät 36 aufrechterhalten bleiben, bis die jeweilige Eingabe beendet ist, damit der Benutzer bei der Eingabe nicht auf sein Gedächtnis angewiesen ist. Die Tastatur 34 weist daher beim Ausführungsbeispiel einen Pufferspeicher zur Zwischenspeicherung eingegebener Daten auf. Dieser Pufferspeicher könnte auch in der Eingabe/Ausgabe-Einrichtung 40 oder dem Bildschirmgerät 36 vorgesehen sein. Mit dem Pufferspeicher kann gewünschtenfalls auch, wie in Fig. 2 gestrichelt angedeutet ist, eine den Inhalt des Pufferspeichers in alphanumerischer Klarschrift anzeigende Anzeigevorrichtung 56 verbunden sein. Es kann sich dabei beispielsweise um eine von Textverarbeitungsgeräten bekannte Leuchtschriftanzeige handeln, die zur Anzeige einer Zeile von Zeichen ausgebildet ist.

Eine Eingabemöglichkeit kann zweckmäßig auch dadurch geschaffen werden, daß eine Anzeigevorrichtung zur Erzeugung einer Leuchtmarkierung auf dem Bildschirm des Bildschirmgerätes 36 ausgebildet ist, daß in Abhängigkeit davon, daß die Ausgabe einer mehrere Schlüsselworte oder Adressen von Datenbanken umfassenden Informationsfolge über den Bildschirm erfolgt, im Bereich der ersten Information dieser Informationsfolge auf dem Bildschirm die Leuchtmarkierung mittels über die Tastatur 34 einge-

gebener Befehle gewünschtenfalls in den Bereich einer der übrigen Informationen der Informationsfolge auf dem Bildschirm verschoben wird und daß die Eingabe eines Schlüsselwortes der der Adresse einer Datenbank über eine Koinzidenzschaltung in Abhängigkeit von der Eingabe des oben erläuterten Fortschaltbefehls bzw. eines Anschaltbefehls sowie in Abhängigkeit davon erfolgt, im Bereich welcher Information sich die Leuchtmarkierung auf dem Bildschirm befindet. Bei dieser besonders für die Eingabe von Datenbankadressen geeigneten Art der Eingabe verschiebt also der Benutzer auf dem Bildschirm zunächst die Leuchtmarkierung beispielsweise zu der gewünschten Adresse, worauf durch einen zusätzlichen Befehl die Eingabe vervollständigt wird. Wird der Befehl - bei der Eingabe einer Datenbankadresse der Anschaltbefehl - gegeben, ohne daß zuvor die Leuchtmarkierung verschoben wurde, so wird automatisch die erste unter mehreren auf dem Bildschirm angezeigten Informationen ausgewählt und eingegeben.

Sofern der Betreiber der Endeinrichtung E wünscht, daß im Falle mehrerer für ein Schlüsselwort oder eine Schlüsselwortkombination zur Verfügung stehender Datenbanken eine Auswahl unter diesen Datenbanken nach bestimmten Kriterien erfolgt, wird er diese bei Einsatz der Anzeigevorrichtung mit Leuchtmarkierung derart ordnen müssen, daß bei der Ausgabe der Datenbankadressen die Adresse der Datenbank mit höchster Priorität im ersten Informationsbereich des Bildschirmgerätes 36 angezeigt wird, damit bei unterbleibender Auswahl durch den Bediener der Endeinrichtung E automatisch die erste Adresse und damit die Datenbank der höchsten Priorität

als ausgewählt gilt. Bei komplizierten oder zeitlich wechselnden Prioritätskriterien kann es jedoch schwierig oder unmöglich sein, die Reihenfolge der Darstellung mit der Prioritätsreihenfolge in Übereinstimmung zu bringen. Bei nicht mit der erläuterten Lichtmarkierung arbeitenden Eingabeverfahren kann es daher zweckmäßig sein, die Endeinrichtung E hinsichtlich der Prioritätskriterien der Datenbanken programmierbar auszubilden und den Prozessor 44 in konjunktiver Abhängigkeit davon, daß gleichzeitig mehrere Adressen von Datenbanken ausgegeben sind, daß keine Adresse einer Datenbank eigegeben ist und daß ein Anschaltbefehl erzeugt wird, unter den ausgegebenen Adressen nach dem vorgegebenen Prioritätskriterium eine einzige einzugebende Adresse auswählen zu lassen. Das Prioritätskriterium kann dabei beispielsweise die Länge des Verbindungswegs zur jeweiligen Datenbank oder ein Kostenfaktor sein, der gebildet ist aus dem Quotienten aus den Benutzerkosten je Zeiteinheit und der Datenrate des der Datenbank zugeordneten Verbindungsweges. Auch bei dieser freien Wählbarkeit des Prioritätskriteriums kann dieses allerdings die Reihenfolge der gleichzeitig auf dem Bildschirm des Bildschirmgerätes 36 ausgegebenen Adressen sein, unter denen der Prozessor 44 die erste auswählt.

P a t e n t a n s p r ü c h e

1. Informationssystem zur Übertragung von Informationsdaten im Dialogbetrieb zwischen mehreren Datenverarbeitungsanlagen, von denen mindestens eine als
Datenbank (D1 bis D4) ausgebildet ist und mindestens
einen Speicher für Informationsdaten und für Suchworte umfaßt, und daran über Verbindungswege (10; 12 bis
16; 18 bis 32; V1 bis V4) anschaltbaren, jeweils einen
Eingabeteil (34), einen Ausgabeteil (36, 38), einen
Prozessor (44) und einen Speicher (46) aufweisenden
Endeinrichtungen (E1 bis E3; E), dadurch gekennzeichnet, daß von jeder Endeinrichtung (E1 bis E3, E)
Verbindungswege (10; 12 bis 16; 18 bis 32; V1 bis V4)
zu jeder Datenverarbeitungsanlage (D1 bis D4) führen, daß in jeder Endeinrichtung (E1 bis E3; E)
Daten gespeichert sind, die physikalische und/oder
logische Parameter jedes zu einer Datenverarbeitungsanlage (D1 bis D4) führenden Verbindungsweges
(10; 12 bis 16; 18 bis 32; V1 bis V4) kennzeichnen,
und daß der Prozessor (44) jeder Endeinrichtung (E1
bis E3; E) auf die Eingabe eines eine Datenverarbeitungsanlage (D1 bis D4) bezeichnenden Befehls hin
die Anschaltung der Endeinrichtung (E1 bis E3; E)
an den zu dieser Datenverarbeitungsanlage (D1 bis D4)
führenden Verbindungsweg (10; 12 bis 16; 18 bis 32;
V1 bis V4) bewirkt.

2. Informationssystem nach Anspruch 1, wobei mindestens
zwei Datenbanken (D1 bis D4) unterschiedliche Befehlstabellen aufweisen und wobei der Zugriff auf die Informationsdaten einer Datenbank (D1 bis D4) durch Eingabe von Suchworten und von Befehlen der jeweiligen Befehltabelle in die Datenbank (D1 bis D4) erfolgt, dadurch gekennzeichnet, daß in dem Speicher (46) jeder Endeinrichtung (E1 bis E3; E) für jede Datenbank (D1 bis D4) Schlüsselworte für die darin gespeicherten Sachgebiete sowie Daten gespeichert sind, die eine Adresse der Datenbank (D1 bis D4), eine Teilnehmeradresse bezüglich der Datenbank (D1 bis D4) und die Befehlstabelle der Datenbank (D1 bis D4) kennzeichnen, und daß der Prozessor (44) jeder Endeinrichtung (E1 bis E3; E) auf die Eingabe eines Anforderungsbefehls (A) hin die Ausgabe von Schlüsselworten aller Datenbanken (D1 bis D4) aus dem Speicher (46) über den jeweiligen Ausgabeteil (36, 38) bewirkt, auf die Eingabe eines Schlüsselwortes über den jeweiligen Eingabeteil (34) hin die Ausgabe der Adressen aller Datenbanken (D1 bis D4) bewirkt, in denen das durch dieses Schlüsselwort bezeichnete Sachgebiet gespeichert ist, und auf die Eingabe der Adresse einer Datenbank (D1 bis D4) hin die Anschaltung an den zu dieser Datenbank (D1 bis D4) führenden Verbindungsweg (10; 12 bis 16; 18 bis 32; V1 bis V4) bewirkt.

3. Informationssystem nach Anspruch 2, dadurch gekennzeichnet, daß jede Endeinrichtung (E1 bis E3; E) eine der Anzahl der unterschiedlichen Befehlstabellen der Datenbanken (D1 bis D4) entsprechende Anzahl von Sprachwandlern (in 48) aufweist, die zur Übersetzung jeweils einer Befehlstabelle einer Befehlstabelle einer Datenbank (D1 bis D4) in eine einzige übergeordnete Befehlstabelle und umgekehrt ausgebildet sind, und daß der Prozessor (44) jeder Endeinrichtung (E1 bis E3; E) bei deren Anschaltung in Abhängigkeit von der aktuellen Adresse einer Datenbank (D1 bis D4) den zugehörigen Sprachwandler (in 48) aktiviert, der im aktivierten Zustand bei Eingabe eines Befehls über den Eingabeteil (34) oder bei Empfang eines mit der jeweiligen Teilnehmeradresse verknüpften Befehls von der verbundenen Datenbank (D1 bis D4) die Übersetzung des Befehls ausführt.

4. Informationssystem nach Anspruch 2 oder 3, dadurch gekennzeichnet, daß in dem Speicher (46) zusätzlich zu den Schlüsselworten Oberbegriffe zu diesen bildende Fachgebietsworte gespeichert sind und daß der Prozessor (44) auf die Eingabe eines ersten Anforderungsbefehls (A) hin die Ausgabe der Fachgebietsworte bewirkt und auf die Eingabe eines zweiten Anforderungsbefehls hin die Ausgabe von den Fachgebietsworten zugeordneten Schlüsselworten aller Datenbanken (D1 bis D4) bewirkt.

5. Informationssystem nach einem der Ansprüche 2 bis 4, dadurch gekennzeichnet, daß die Schlüsselworte in den Speichern (46) der Endeinrichtungen (E1 bis E3; E) jeweils als Teilbereich einer Schlüsselwortfolge gespeichert sind, die zusätzliche Erläuterungen zu dem Schlüsselwort enthält.

6. Informationssystem nach einem der Ansprüche 2 bis 5, dadurch gekennzeichnet, daß die Adressen der Datenbanken (D1 bis D4) in den Speichern (46) der Endeinrichtungen (E1 bis E3; E) jeweils als Teilbereich einer Adressenwortfolge gespeichert sind, die zusätzlich eine Beschreibung der Datenbank (D1 bis D4)

- 24 -

0103295

umfaßt, und daß diese Adressenwortfolge auf die Eingabe eines Schlüsselwortes hin ausgegeben wird.

7. Informationssystem nach einem der Ansprüche 3 bis 6, dadurch gekennzeichnet, daß der Sprachwandler (in 48) einen einen Lesespeicher und ggf. einen Schreib-Lesespeicher unfassenden Speicherbereich aufweist.

8. Informationssystem nach einem der Ansprüche 3 bis 7, dadurch gekennzeichnet, daß in jeder Endeinrichtung (E1 bis E3, E) der Prozessor (44), der Speicher (46) und die Sprachwandler (in 48) an eine Sammelleitung (42) angeschlossen sind.

9. Informationssystem nach einem der Ansprüche 3 bis 8, dadurch gekennzeichnet, daß der Speicher (46) als die Befehlsliste jeder Datenbank (D1 bis D4) kennzeichnende Daten eine Adresse des der Befehlsliste zugeordneten Sprachwandlers (in 48) speichert und daß der Prozessor (44) in Abhängigkeit von der aktuellen Adresse einer Datenbank (D1 bis D4) das Auslesen der Adresse des zugeordneten Sprachwandlers (in 48) aus dem Speicher (46) bewirkt.

10. Informationssystem nach den Ansprüchen 7 bis 9, dadurch gekennzeichnet, daß die Speicherplätze des Speicherbereichs des Sprachwandlers (in 48) zur Übersetzung aus der übergeordneten Befehlstabelle in die Befehlstabelle einer Datenbank (D1 bis D4) von Befehlsworten adressierbar sind, die aus der aktuellen Adresse des Sprachwandlers und einem über den jeweiligen Eingabeteil (34) eingegebenen Befehl gebildet sind, und daß diese Speicherplätze zur Übersetzung aus der Befehlstabelle einer Datenbank (D1 bis D4) in die übergeordnete Befehlstabelle von Befehlsworten adressierbar sind, die aus der aktuellen Adresse des Sprachwandlers und einem von der verbundenen Datenbank (D1 bis D4) empfangenen Befehl gebildet sind.

11. Informationssystem nach einem der Ansprüche 3 bis 10, dadurch gekennzeichnet, daß jede Endeinrichtung eine Verbindungseinrichtung (50) umfaßt, die zur Übertragung von Befehlen mit den Sprachwandlern (in 48) und zur Übertragung von Informationen mit dem Prozessor (44) verbunden ist und die zur Anschaltung an den jeweils zugeordneten Verbindungsweg (10; 12 bis 16; 18 bis 32; V1 bis V4) und zur Einstellung von dessen Parametern vom Prozessor (44) in Abhängigkeit von der aktuellen Adresse einer Datenbank (D1 bis D4) gesteuert ist.

FIG. 1

0103295

FIG. 2

0103295

Eingabe Anforderungsbefehl A
Datenverkehr gewünscht

Anzeige Schlüsselworte
Gespeicherte Sachgebiete

Eingabe Schlüsselwort
Sachgebiet

Anzeige
Datenbanken

Eingabe
Datenbank

manuell    automat.    Verbindungsaufbau

Einstellung physik. und logische
Parameter

Aufruf Sprachwandler

Dialog mit Datenbank

FIG. 3